# EUROPEAN PATENT SPECIFICATION

(11) **EP 3 486 016 B1**
(45) Date of publication and mention of the grant of the patent: **01.06.2022**
(21) Application number: 18214131.7
(22) Date of filing: 20.02.2012
(51) Int. Cl.: B23F 21/02, B23F 5/04

(54) **GEAR GRINDING MACHINE AND METHOD**
MASCHINE UND VERFAHREN ZUM SCHLEIFEN VON GETRIEBEN
MEULE ET PROCÉDÉ DE BROYAGE D'ENGRENAGES

(30) Priority: 13.07.2011 JP 2011154381
(43) Date of publication of application: 22.05.2019
(62) Divisional of application: 12811833.8
(73) Proprietor: Nidec Machine Tool Corporation, Ritto-shi, Shiga 520-3080 (JP)
(72) Inventor: YANASE, Yoshikoto, Tokyo, 108-8215 (JP); OCHI, Masashi, Tokyo, 108-8215 (JP)
(74) Representative: Studio Torta S.p.A.

(56) References cited:
- DE-A1-102004 020 364
- DE-B- 1 124 786
- JP-A- S5 028 096
- JP-A- 2008 110 461
- US-A- 3 550 330
- US-A1- 2005 239 385
- US-A1- 2007 275 638
- US-A1- 2011 076 926

## Description

### TECHNICAL FIELD

The present invention relates to a threaded grinding wheel for gear grinding formed of threaded grinding wheels of two types differing in grinding performance, and to a gear grinding method using this threaded grinding wheel for gear grinding.

### BACKGROUND ART

As a method of grinding gears, a method has conventionally been well known which involves rotating a gear and a threaded grinding wheel in mesh with each other to grind the gear's tooth surfaces with the threaded grinding wheel's grinding surfaces.

Meanwhile, gears are important mechanical elements that transmit drive force, and the level of their machining accuracy affects machines' vibrations and noises. Particularly, in recent years, in the field of automobiles giving importance to comfortability, there have been increasing demands for improvement in the machining accuracy of gears for use in transmissions and like so as to eliminate causes of vibrations and noises.

In this respect, to improve the gear machining accuracy, threaded grinding wheels for gear grinding have conventionally been provided which have grinding surfaces of two types differing in grinding performance so that gear grinding can be performed in two steps. Such a threaded grinding wheel for gear grinding is disclosed in Japanese Patent Application Publication No. 2011-73071.

Other known prior art grinding systems and methods are disclosed in JP S5028096 A, US2005/239385 A1, DE102004020364 A1, JP2008110461 A, US2007275638 A1 or DE1124786 B.

### SUMMARY OF THE INVENTION

### PROBLEMS TO BE SOLVED BY THE INVENTION

Here, the above conventional threaded grinding wheel has a rough-finish grinding surface formed in a helical pattern and further a finish grinding surface formed in a helical pattern in an outer portion of the rough-finish grinding surface in the grinding-wheel radial direction.

However, forming the rough-finish grinding surface and the finish grinding surface next to each other in the grinding-wheel radial direction as mentioned above reduces the widthwise areas of both grinding surfaces. Thus, if one of the rough-finish grinding surface and the finish grinding surface is used to grind a gear, the other of the rough-finish grinding surface and the finish grinding surface may possibly contact the gear. Moreover, it is very difficult to form the finish grinding surface further in the helical rough-finish grinding surface, and it is remarkably so when the threaded grinding wheel itself is small. For this reason, in the case of the above conventional threaded grinding wheel, it is difficult to perform grinding by using only one of the grinding surfaces of two types differing in grinding performance, and therefore the gear machining accuracy may possibly fail to be improved sufficiently.

The present invention has been made to solve the above problems, and an object thereof is to provide a threaded grinding wheel for gear grinding and a gear grinding method which allow accurate gear grinding with a simple configuration.

### MEANS FOR SOLVING THE PROBLEMS

The aforementioned problems are solved by a gear grinding machine and method as claimed in the appended set of claims.

### EFFECTS OF THE INVENTION

Thus, the threaded grinding wheel for gear grinding according to the present invention can achieve accurate grinding of a machining-target gear with a simple configuration since it is formed of the first threaded grinding wheel and the second threaded grinding wheel of two types differing in grinding performance.

The gear grinding method according to the present invention can also achieve accurate grinding of a machining-target gear with a simple configuration since it uses the threaded grinding wheel formed of the first threaded grinding wheel and the second threaded grinding wheel of two types differing in grinding performance.

### BRIEF DESCRIPTION OF THE DRAWINGS

- Fig. 1 is a perspective view showing how a machining-target external gear is ground using a threaded grinding wheel for gear grinding according to the present invention.
- Fig. 2 is a side view of the threaded grinding wheel for gear grinding of Fig. 1.
- Fig. 3 is a perspective view showing how a machining-target internal gear is ground using a threaded grinding wheel for gear grinding according to an embodiment that does not make part of present invention but that is useful for its understanding.
- Fig. 4 is a vertical cross-sectional view of the threaded grinding wheel for gear grinding of Fig. 3.
- Fig. 5 is a plan view showing how the threaded grinding wheel for gear grinding of Fig. 3.meshes with a machining-target internal gear in an early stage.

### MODES FOR CARRYING OUT THE INVENTION

Hereinbelow, a threaded grinding wheel for gear grinding and a gear grinding method according to the present invention will be described in detail with reference to the drawings.

### [EMBODIMENTS]

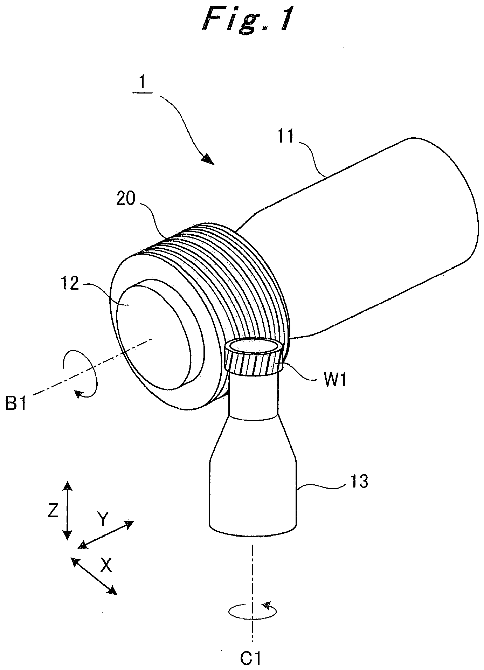

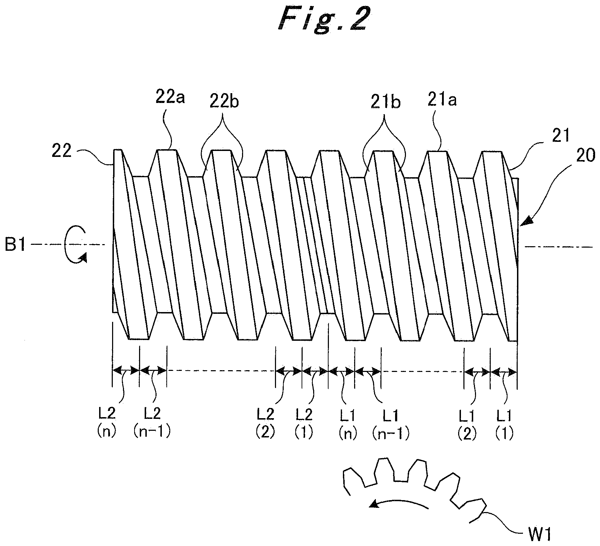

First, a threaded grinding wheel for gear grinding and a gear grinding method using this according to the present invention will be described in detail with reference to Figs. 1 and 2.

As shown in Fig. 1, a grinding-wheel head 11 is supported on a gear grinding machine 1 movably in an X-axis direction (grinding-wheel cut-in direction) and a Y-axis direction (grinding-wheel shift direction) which are horizontal, as well as in a Z-axis direction (grinding-wheel feed direction) which is vertical. Moreover, a spindle 12 is supported on the grinding-wheel head 11 rotatably about a grinding-wheel rotation axis B1. A threaded grinding wheel 20 for external gear grinding formed in a cylindrical shape is detachably mounted to the tip of the spindle 12.

Thus, by driving the grinding-wheel head 11, the threaded grinding wheel 20 can be moved in the X-axis, Y-axis, and Z-axis directions, and the threaded grinding wheel 20 can also be rotated about the grinding-wheel rotation axis B1 along with the spindle 12.

Moreover, a table 13 is supported on the gear grinding machine 1 rotatably about a workpiece rotation axis C1 which is vertical. Moreover, a workpiece (machining-target external gear) W1 is detachably attached to the upper surface of the table 13. Thus, by driving the table 13, the workpiece W1 can be rotated about the workpiece rotation axis C1 along with the table 13.

Here, as shown in Figs. 1 and 2, the cylindrical threaded grinding wheel 20 is a single threaded grinding wheel for external gear grinding formed of a threaded grinding wheel (first threaded grinding wheel) 21 and a threaded grinding wheel (second threaded grinding wheel) 22 of two types differing in grinding performance.

The threaded grinding wheels 21 and 22 have the same grinding wheel specifications, except that the type of grinding wheel is different due to their differences in, for example, the type and size of abrasive grain, the type and bonding degree of bond, porosity, and so on. Specifically, the threaded grinding wheel 22 is capable of finer grinding than the threaded grinding wheel 21 and has higher grinding performance than the grinding performance of the threaded grinding wheel 21.

Hence, the threaded grinding wheel 21 is a finish grinding wheel for grinding of a workpiece W1 after heat treatment or a workpiece W1 rough-finished after heat treatment. On the other hand, the threaded grinding wheel 22 is a super-finish grinding wheel for finer grinding of a workpiece W1 ground by the threaded grinding wheel 21. Note that the grinding-wheel width of the threaded grinding wheel 21 and the grinding-wheel width of the threaded grinding wheel 22 may be set either to the same length or to different lengths.

Moreover, a ridge 21a is provided at the outer periphery of the threaded grinding wheel 21 in a helical pattern over the entire length of the threaded grinding wheel 21 in the grinding-wheel width direction (grinding-wheel axial direction). Finish grinding surfaces 21b are formed at left and right inclined faces of the ridge 21a. Likewise, a ridge 22a is provided at the outer periphery of the threaded grinding wheel 22 in a helical pattern over the entire length of the threaded grinding wheel 22 in the grinding-wheel width direction (grinding-wheel axial direction). Super-finish grinding surfaces 22b are formed at left and right inclined faces of the ridge 22a.

Specifically, the threaded grinding wheel 20 is formed as a connected body of grinding wheels obtained by connecting the threaded grinding wheels 21 and 22 at their end surfaces by means of adhesive or the like such that the ridges 21a and 22a of the threaded grinding wheels 21 and 22, which are disposed coaxially, are connected to each other. In addition, with the end surfaces of the threaded grinding wheels 21 and 22 being brought into contact with and connected to each other as described above, the finish grinding surfaces 21b of the threaded grinding wheel 21 and the super-finish grinding surfaces 22b of the threaded grinding wheel 22 form grinding surfaces that are flush with each other in the direction of the thread of the threaded grinding wheel 20.

Meanwhile, as will be described later in detail, in grinding a workpiece W1 with the threaded grinding wheel 20, the workpiece W1 is first finished with the threaded grinding wheel 21, and the workpiece W1 thus finished is then super finished with the threaded grinding wheel 22.

Here, as shown in Fig. 2, the threaded grinding wheels 21 and 22 have multiple grinding ranges L1 and L2 which are previously set therealong successively in the grinding-wheel width direction. These grinding ranges L1 and L2 are defined by a predetermined length in the grinding-wheel width direction and serve as use ranges each of which can be used for grinding one workpiece W1.

Specifically, for the threaded grinding wheel 21, n grinding ranges L1 including a grinding range L1(1), a grinding range L1(2), ... a grinding range L1(n-1), and a grinding range L1(n) are set in this order from one end to the other end. Moreover, for the threaded grinding wheel 22, n grinding ranges L2 including a grinding range L2(1), a grinding range L2(2), ... a grinding range L2(n-1), and a grinding range L2(n) are set in this order from one end to the other end.

In other words, one of the grinding ranges L1 of the threaded grinding wheel 21 and one of the grinding ranges L2 of the threaded grinding wheel 22 are used for one workpiece W1. Moreover, by using each individual set of grinding ranges L1 and L2 of the threaded grinding wheels 21 and 22 as use ranges for one workpiece 1 as described above, one threaded grinding wheel 20 can grind n workpieces W1.

Thus, in grinding a workpiece W1 with the threaded grinding wheel 20, phase alignment is first performed between the threaded grinding wheel 21 and the workpiece W1, so that the finish grinding surfaces 21b of the threaded grinding wheel 21 in the grinding range L1(1) and left and right tooth surfaces of the workpiece W1 are meshed.

Thereafter, the threaded grinding wheel 20 is caused to cut in in the X-axis direction and fed in the Z-axis direction along with synchronous rotation of the threaded grinding wheel 20 and the workpiece W1 with the threaded grinding wheel 21 and the workpiece W1 in mesh with each other as mentioned above. As a result, the finish grinding surfaces 21b of the threaded grinding wheel 21 in the grinding range L1(1) grind the left and right tooth surfaces of the workpiece W1.

Then, the threaded grinding wheel 21 is moved away from the workpiece W1, and the threaded grinding wheel 20 is then shifted in the Y-axis direction (in the direction of the grinding-wheel rotation axis B1).

Thereafter, the super-finish grinding surfaces 22b of the threaded grinding wheel 22 in the grinding range L2(1) and left and right tooth surfaces of the workpiece W1 are meshed together.

Then, the threaded grinding wheel 20 is caused to cut in in the X-axis direction and fed in the Z-axis direction along with synchronous rotation of the threaded grinding wheel 20 and the workpiece W1 with the threaded grinding wheel 22 and the workpiece W1 in mesh with each other as mentioned above. As a result, the finish grinding surfaces 22b of the threaded grinding wheel 22 in the grinding range L2(1) grind the left and right tooth surfaces of the workpiece W1. In other words, the grinding of the first workpiece W1 with the threaded grinding wheel 20 is completed.

Thereafter, in grinding the second workpiece W1, the above-described grinding operations are performed using the finish grinding surfaces 21b in the grinding range L1(2) and the super-finish grinding surfaces 22b in the grinding range L2(2). Then, the same grinding operations are repeated by subsequently changing the grinding ranges L1 and L2 until the n-th workpiece W1 is ground.

Then, once the grinding of the n-th workpiece W1 is completed, the threaded grinding wheel 20 is dressed with a dresser (not shown). In this process, the threaded grinding wheels 21 and 22 can be continuously dressed with one dresser because the finish grinding surfaces 21b of the threaded grinding wheel 21 and the super-finish grinding surfaces 22b of the threaded grinding wheel 22 are connected in such a way as to be flush with each other.

Thus, the threaded grinding wheel 20 for gear grinding according to the present invention can achieve a simple structure since it is formed of the threaded grinding wheel 21 and the threaded grinding wheel 22 of two types differing in grinding performance, and the threaded grinding wheel 20 can also accurately grind workpieces W1 since two types of grinding processes can be performed successively.

Moreover, the gear grinding method according to the present invention makes it possible to properly select one of the threaded grinding wheel 21 and the threaded grinding wheel 22 of two types differing in grinding performance in the threaded grinding wheel 20 formed of the threaded grinding wheel 21 and the threaded grinding wheel 22. Thus, two types of grinding processes can be performed successively, and therefore workpieces W1 can be accurately ground.

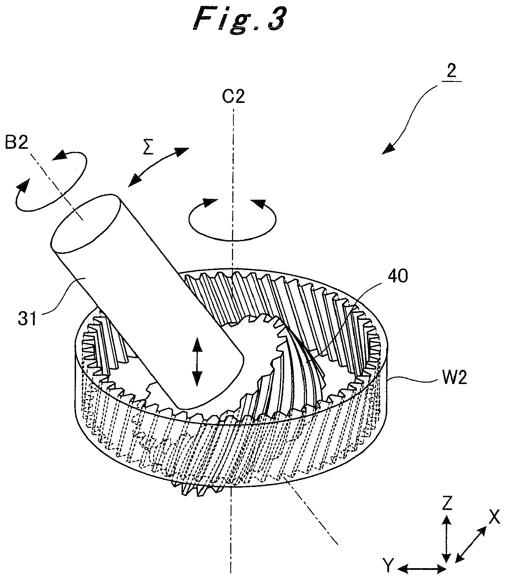

Next, a threaded grinding wheel for gear grinding and a gear grinding method using this according to an embodiment that does not make part of the present invention but is useful for its understanding will be described in detail with reference to Figs. 3 to 5.

As shown in Fig. 3, a spindle (grinding-wheel arbor) 31 is supported on a gear grinding machine 2 movably in an X-axis direction (grinding-wheel cut-in direction) and a Y-axis direction which are horizontal, as well as in a Z-axis direction (grinding-wheel feed direction) which is vertical, through an unillustrated grinding-wheel head. Further, the spindle 31 is supported on the grinding-wheel head rotatably about a grinding-wheel rotation axis B2. A threaded grinding wheel 40 for internal gear grinding formed in a barrel shape is detachably mounted to the tip of the spindle 31.

Thus, by driving the grinding-wheel head, the threaded grinding wheel 40 can be moved in the X-axis, Y-axis, and Z-axis directions, and the threaded grinding wheel 40 can also be rotated about the grinding-wheel rotation axis B2 along with the spindle 31.

Moreover, a workpiece (machining-target internal gear) W2 is attached to the gear grinding machine 2 through an unillustrated table rotatably about a workpiece rotation axis C2 which is vertical. Thus, by driving the table, the workpiece W2 can be rotated about the workpiece rotation axis C2.

Note that the spindle 31 (grinding-wheel head) is supported turnably about an unillustrated grinding-wheel turn axis extending in the X-axis direction. Thus, by turning the spindle 31 about the grinding-wheel turn axis, the turn angle (inclination angle) of the grinding-wheel rotation axis B2 can be changed. In this way, the axis crossing angle between the grinding-wheel rotation axis B2 and the workpiece rotation axis C2 (hereinafter, referred to as the axis angle Σ) can be adjusted according to the helix angle of the workpiece W2. In other words, the threaded grinding wheel 40 during grinding is rotated about the grinding-wheel rotation axis B2 which crosses the workpiece rotation axis C2 of the workpiece W2 at the axis angle Σ.

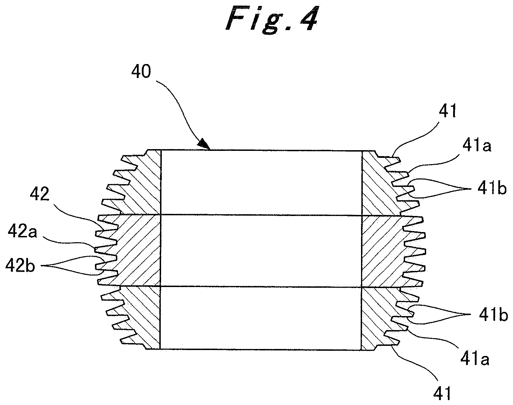

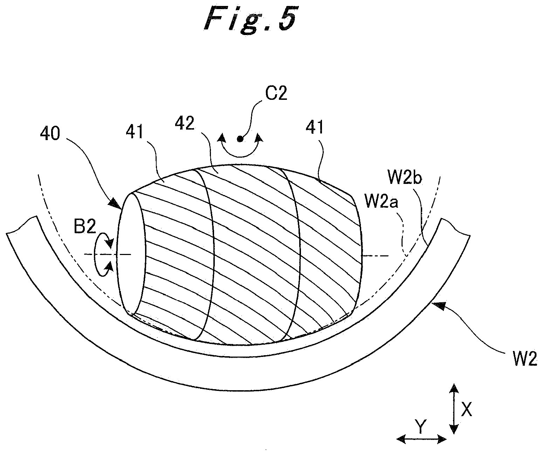

Here, as shown in Figs. 4 and 5, the barrel-shaped threaded grinding wheel 40 is a single threaded grinding wheel for internal gear grinding formed of threaded grinding wheels (first threaded grinding wheel) 41 and a threaded grinding wheel (second threaded grinding wheel) 42 of two types differing in grinding performance.

Specifically, the threaded grinding wheel 40 is formed of the threaded grinding wheels 41 provided on two opposite sides in the grinding-wheel width direction and the threaded grinding wheel 42 provided between the threaded grinding wheels 41. As its entire shape in the grinding-wheel width direction, the threaded grinding wheel 40 is formed in such a barrel shape as to gradually decrease in diameter from the center in the grinding-wheel width direction toward either end in the grinding-wheel width direction. Moreover, by forming the threaded grinding wheel 40 in a barrel shape as described above, the threaded grinding wheel 40 disposed at the axis angle Σ can be brought into mesh with the workpiece W2 over the entire length thereof in the grinding-wheel width direction. Note that the grinding-wheel width of the threaded grinding wheels 41 and the grinding-wheel width of the threaded grinding wheel 42 may be set either to the same length or to different lengths.

The threaded grinding wheels 41 and 42 have the same grinding wheel specifications, except that the type of grinding wheel is different due to their differences in, for example, the type and size of abrasive grain, the type and bonding degree of bond, porosity, and so on. Specifically, the threaded grinding wheel 42 is capable of finer grinding than the threaded grinding wheels 41 and has higher grinding performance than the grinding performance of the threaded grinding wheels 41.

Hence, the threaded grinding wheels 41 are finish grinding wheels for grinding of a workpiece W2 after heat treatment or a workpiece W2 rough-finished after heat treatment. On the other hand, the threaded grinding wheel 42 is a super-finish grinding wheel for finer grinding of a workpiece W2 ground by the threaded grinding wheels 41.

Moreover, each threaded grinding wheel 41 is formed in such a barrel shape as to gradually decrease in diameter from one end in the grinding-wheel width direction toward the other end in the grinding-wheel width direction. Further, ridges 41a are provided at the outer periphery of the threaded grinding wheel 41 in helical patterns over the entire length of the threaded grinding wheel 41 in the grinding-wheel width direction (grinding-wheel axial direction). Finish grinding surfaces 41b are formed at left and right inclined faces of each ridge 41a.

On the other hand, the threaded grinding wheel 42 is formed in such a barrel shape as to gradually decrease in diameter from the center in the grinding-wheel width direction toward either end in the grinding-wheel width direction. Further, ridges 42a are provided at the outer periphery of the threaded grinding wheel 42 in helical patterns over the entire length of the threaded grinding wheel 42 in the grinding-wheel width direction (grinding-wheel axial direction). Super-finish grinding surfaces 42b are formed at left and right inclined faces of each ridge 42a.

Specifically, the threaded grinding wheel 40 is formed as a connected body of grinding wheels obtained by connecting the threaded grinding wheels 41 and 42 at their end surfaces by means of adhesive or the like such that the ridges 41a and 42a of the threaded grinding wheels 41 and 42, which are disposed coaxially, are connected to each other. In addition, with the end surfaces of the threaded grinding wheels 41 and 42 being brought into contact with and connected to each other as described above, the finish grinding surfaces 41b of the threaded grinding wheels 41 and the super-finish grinding surfaces 42b of the threaded grinding wheel 42 form grinding surfaces that are flush with each other in the direction of the threads of the threaded grinding wheel 40.

Meanwhile, as will be described later in detail, in grinding a workpiece W2 with the threaded grinding wheel 40, the workpiece W2 is first finished with the threaded grinding wheels 41, and the workpiece W2 thus finished is then super finished with the threaded grinding wheel 42.

Here, as shown in Fig. 5, the workpiece W2 before the grinding is given a machining allowance (grinding allowance) W2a of a predetermined thickness from a tooth profile W2b which is the final tooth shape after the grinding. On the other hand, the edge profiles of the ridges 41a and 41b of the threaded grinding wheel 40 are designed based on the tooth profile W2b. Here, the machining allowance W2a and the tooth profile W2b of the workpiece W2 are shown in Fig. 5 schematically by curves.

Thus, in grinding a workpiece W2 with the threaded grinding wheel 40, the first grinding stage involves grinding the machining allowance W2a of the workpiece W2 only with the finish grinding surfaces 41b of the threaded grinding wheel 41 at either end of the threaded grinding wheel 40 in the grinding-wheel width direction. Then, as the grinding continues further, thereby thinning the machining allowance W2a, the threaded grinding wheel 40 shifts its grinding range from either end in the grinding-wheel width direction toward the center in the grinding-wheel width direction, and eventually grinds the remaining machining allowance W2a only with the super-finish grinding surfaces 42b of the threaded grinding wheel 42 at the center of the threaded grinding wheel 40 in the grinding-wheel width direction. As a result, the tooth profile W2b is obtained.

Thus, in grinding a workpiece W2 with the threaded grinding wheel 40, the threaded grinding wheel 40 is first disposed at the axis angle Σ corresponding to the helix angle of the workpiece W2.

Thereafter, phase alignment is performed between the threaded grinding wheel 40 and the workpiece W2, and they are meshed together. Here, immediately after the meshing, the finish grinding surfaces 41a of the threaded grinding wheels 41 and the machining allowance W2a of the workpiece W2 are in mesh with each other.

Then, the threaded grinding wheel 40 is caused to cut in in the X-axis direction and fed in the Z-axis direction along with synchronous rotation of the threaded grinding wheel 20 and the workpiece W2 with the threaded grinding wheels 41 and the workpiece W2 in mesh with each other as mentioned above. As a result, the finish grinding surfaces 41b of the threaded grinding wheels 41 grind the machining allowance W2a of the workpiece W2.

Thereafter, as the grinding with the finish grinding surfaces 41b of the threaded grinding wheels 41 continues, the machining allowance W2a is gradually thinned. When the machining allowance W2a reaches a predetermined thickness, the contact of the threaded grinding wheels 41 with the workpiece W2 becomes small whereas the contact of the threaded grinding wheel 42 becomes very large. That is, the grinding with the finish grinding surfaces 41b of the threaded grinding wheels 41 is completed, and grinding with the super-finish grinding surfaces 42b of the threaded grinding wheel 42 is started.

Furthermore, as the grinding continues, the super-finish grinding surfaces 42a of the threaded grinding wheel 42 grind the machining allowance W2a of the workpiece W2 ground to the predetermined thickness by the finish grinding surfaces 41b of the threaded grinding wheels 41. As a result, the super-finish grinding surfaces 42a of the threaded grinding wheel 42 eventually form the tooth profile W2b of the workpiece W2.

Meanwhile, the finish grinding surfaces 41b and the super-finish grinding surfaces 42b are worn away and their sharpness decreases as the threaded grinding wheel 40 is used to grind a certain number of workpieces W2. For this reason, the finish grinding surfaces 41b and the super-finish grinding surfaces 42b are dressed periodically with a dresser (not shown). In this process, the threaded grinding wheels 41 and 42 can be continuously dressed with one dresser because the finish grinding surfaces 41b of the threaded grinding wheels 41 and the super-finish grinding surfaces 42b of the threaded grinding wheel 42 are connected in such a way as to be flush with each other.

Thus, the threaded grinding wheel 40 for gear grinding can achieve a simple structure since it is formed of the threaded grinding wheels 41 and the threaded grinding wheel 42 of two types differing in grinding performance, and the threaded grinding wheel 40 can also accurately grind workpieces W2 since two types of grinding processes can be performed successively.

Moreover, the gear grinding method makes it possible to sequentially use the threaded grinding wheels 41 and the threaded grinding wheel 42 of two types differing in grinding performance in the threaded grinding wheel 40 formed of the threaded grinding wheels 41 and the threaded grinding wheel 42. Thus, two types of grinding processes can be performed successively, and therefore workpieces W2 can be accurately ground.

### INDUSTRIAL APPLICABILITY

The present invention is applicable to threaded grinding wheels for gear grinding and gear grinding methods which allow accurate grinding of gears with thick machining allowances.

## Claims

1. A gear grinding machine comprising:
a cylindrical-shaped threaded grinding wheel (20) for gear grinding which grinds a machining-target external gear (W1) by rotating in mesh with the machining-target external gear (W1);
a grinding-wheel head (11) on which a spindle (12) is supported rotatably about a grinding-wheel rotation axis (B1), the threaded grinding wheel (20) being mounted to the spindle (12);
a table (13) to which the machine-target external gear (W1) is attached, the machine-target external gear (W1) being rotated about a rotation axis (C1) along with the table (13),
wherein
the threaded grinding wheel (20) comprises:
a finish threaded grinding wheel (21) which is formed in a cylindrical shape, and in which a ridge (21a) is provided at an outer periphery of the finish threaded grinding wheel (21) in a helical pattern over the entire length of the finish threaded grinding wheel (21) in a grinding-wheel width direction and finish grinding surfaces (21b) are formed at left and right inclined faces of the ridge (21a); and
a super-finish threaded grinding wheel (22) which is formed in a cylindrical shape, and in which a ridge (22a) is provided at an outer periphery of the super-finish threaded grinding wheel (22) in a helical pattern over the entire length of the super-finish threaded grinding wheel (22) in the grinding-wheel width direction and super-finish grinding surfaces (22b) having higher grinding performance than the grinding performance of the finish grinding surfaces (21b) are formed at left and right inclined faces of the ridge (22a), wherein
an end surface of the finish threaded grinding wheel (21) and an end surface of the super-finish threaded grinding wheel (22) are brought into contact with and coaxially connected to each other, and the ridge (21a) of the finish threaded grinding wheel (21) and the ridge (22a) of the super-finish threaded grinding wheel (22) are connected to each other, so that the finish grinding surfaces (21b) of the finish threaded grinding wheel (21) and the super-finish grinding surfaces (22b) of the super-finish threaded grinding wheel (22) form grinding surfaces that are flush with each other in a direction of a thread of the threaded grinding wheel, **characterized in that** the machine further comprises
n first grinding ranges (L1) defined by a first predetermined length in the grinding-wheel width direction are set along the finish threaded grinding wheel (21),
n second grinding ranges (L2) defined by a second predetermined length in the grinding-wheel width direction are set along the super-finish threaded grinding wheel (22),
one of the first grinding ranges (L1) of the finish threaded grinding wheel (21) is configured to be meshed with one machining-target external gear (W1) when machining-target external gears (W1) are to be ground with the finish threaded grinding wheel (21) for finishing,
the finish threaded grinding wheel (21) is configured to be moved away from the machining-target external gear (W1) and the threaded grinding wheel (20) is configured to be shifted in a direction of a rotation axis thereof,
the super-finish grinding surfaces (22b) and tooth surfaces of the machining-target external gear (W1) are configured to be meshed together,
one of the second grinding ranges (L2) of the super-finish threaded grinding wheel (22) is configured to be meshed with one machining-target external gear (W1) when machining-target external gears (W1) are to be ground with the super-finish threaded grinding wheel (22) for super finishing, and
the finishing performed by the finish threaded grinding wheel (21) and the super finishing performed by the super-finish grinding surfaces (22) are repeated by subsequently changing the first grinding ranges (L1) and the second grinding ranges (L2) until the n-th machining-target external gear (W1) is ground.

2. A gear grinding method for performing a grinding process on a machining-target external gear (W1) by rotating the machining-target external gear (W1) and a cylindrical-shaped threaded grinding wheel in mesh with each other, **characterized in that** the gear grinding method comprises:
forming the threaded grinding wheel (20) by use of a finish threaded grinding wheel (21) and a super-finish threaded grinding wheel (22); wherein
the finish threaded grinding wheel (21) is formed in a cylindrical shape, and in which a ridge (21a) is provided at an outer periphery of the finish threaded grinding wheel (21) in a helical pattern over the entire length of the finish threaded grinding wheel (21) in a grinding-wheel width direction and finish grinding surfaces (21b) are formed at left and right inclined faces of the ridge (21a),
the super-finish threaded grinding wheel (22) is formed in a cylindrical shape, and in which a ridge (22a) is provided at an outer periphery of the super-finish threaded grinding wheel (22) in a helical pattern over the entire length of the super-finish threaded grinding wheel (22) in the grinding-wheel width direction and super-finish grinding surfaces (22b) having higher grinding performance than the grinding performance of the finish grinding surfaces (21b) are formed at left and right inclined faces of the ridge (22a), and
an end surface of the finish threaded grinding wheel (21) and an end surface of the super-finish threaded grinding wheel (22) are brought into contact with and coaxially connected to each other, and the ridge (21a) of the finish threaded grinding wheel (21) and the ridge (22a) of the super-finish threaded grinding wheel (22) are connected to each other, so that the finish grinding surfaces (21b) of the finish threaded grinding wheel (21) and the super-finish grinding surfaces (22b) of the super-finish threaded grinding wheel (22) form grinding surfaces that are flush with each other in a direction of a thread of the threaded grinding wheel, **characterized in that** the method further comprises
setting n first grinding ranges (L1) along the finish threaded grinding wheel (21), the first grinding ranges (L1) being defined by a first predetermined length in the grinding-wheel width direction,
setting n second grinding ranges (L2) along the super-finish threaded grinding wheel (22), the second grinding ranges (L2) being defined by a second predetermined length in the grinding-wheel width direction,
using one of the first grinding ranges (L1) of the finish threaded grinding wheel (21) for one machining-target external gear (W1) when machining-target external gears (W1) are to be ground with the finish threaded grinding wheel (21) for finishing;
moving the finish threaded grinding wheel (21) away from the machining-target external gear (W1) and then shifting the threaded grinding wheel (20) in a direction of a rotation axis thereof;
meshing the super-finish grinding surfaces (22b) and tooth surfaces of the machining-target external gear (W1);
using one of the second grinding ranges (L2) of the super-finish threaded grinding wheel (22) for one machining-target external gear (W1) when machining-target external gears (W1) are to be ground with the super-finish threaded grinding wheel (22) for super finishing; and
the finishing performed by the finish threaded grinding wheel (21) and the super finishing performed by the super-finish grinding surfaces (22) are repeated by subsequently changing the first grinding ranges (L1) and the second grinding ranges (L2) until the n-th machining-target external gear (W1) is ground.

## Patentansprüche

1. Zahnradschleifmaschine, umfassend:
ein zylinderförmiges Schleifrad (20) mit Gewinde zum Zahnradschleifen, das ein Bearbeitungsziel-Außenzahnrad (W1) durch Drehen im Eingriff mit dem Bearbeitungsziel-Außenzahnrad (W1) schleift;
einen Schleifradkopf (11), auf dem eine Spindel (12) um eine Schleifrad-Drehachse (B1) drehbar gelagert ist, wobei das Schleifrad (20) mit Gewinde an der Spindel (12) gelagert ist;
einen Tisch (13), an dem das Bearbeitungsziel-Außenzahnrad (W1) befestigt ist, wobei das Bearbeitungsziel-Außenzahnrad (W1) gemeinsam mit dem Tisch (13) um eine Drehachse (C1) gedreht wird, wobei
das Schleifrad (20) mit Gewinde umfasst:
ein Feinschleifrad (21) mit Gewinde, das in einer zylindrischen Form gebildet ist und in dem eine Rippe (21a) an einem äußeren Umfang des Feinschleifrads (21) mit Gewinde in einer schraubenförmigen Struktur über die gesamte Länge des Feinschleifrads (21) mit Gewinde in einer Schleifrad-Breitenrichtung bereitgestellt ist und Feinschleifoberflächen (21b) an linken und rechten geneigten Seiten der Rippe (21a) gebildet sind; und
ein Superfinish-Schleifrad (22) mit Gewinde, das in einer zylindrischen Form gebildet ist und in dem eine Rippe (22a) an einem äußeren Umfang des Superfinish-Schleifrads (22) mit Gewinde in einer schraubenförmigen Struktur über die gesamte Länge des Superfinish-Schleifrads (22) mit Gewinde in der Schleifrad-Breitenrichtung bereitgestellt ist und Superfinish-Schleifoberflächen (22b), die eine höhere Schleifleistung aufweisen als die Schleifleistung der Feinschleif-Oberflächen (21b) an linken und rechten geneigten Seiten der Rippe (22a) gebildet sind, wobei
eine Endoberfläche des Feinschleifrads (21) mit Gewinde und eine Endoberfläche des Superfinish-Schleifrads (22) mit Gewinde in Kontakt gebracht und koaxial miteinander verbunden werden, und die Rippe (21a) des Feinschleifrads (21) mit Gewinde und die Rippe (22a) des Superfinish-Schleifrads (22) mit Gewinde derart miteinander verbunden sind, dass die Feinschleif-Oberflächen (21b) des Feinschleifrads (21) mit Gewinde und die Superfinish-Schleifoberflächen (22b) des Superfinish-Schleifrads (22) mit Gewinde Schleifoberflächen bilden, die miteinander in einer Richtung eines Gewindes des Schleifrads mit Gewinde bündig sind, **dadurch gekennzeichnet, dass** die Maschine ferner umfasst:
n erste Schleifbereiche (L1), die von einer ersten vorbestimmten Länge in der Schleifrad-Breitenrichtung definiert sind und entlang des Feinschleifrads (21) mit Gewinde eingestellt sind,
n zweite Schleifbereiche (L2), die von einer zweiten vorbestimmten Länge in der Schleifrad-Breitenrichtung definiert sind und entlang des Superfinish-Schleifrads (22) mit Gewinde eingestellt sind,
wobei einer der ersten Schleifbereiche (L1) des Feinschleifrads (21) mit Gewinde so ausgestaltet ist, dass er mit einem Bearbeitungsziel-Außenzahnrad (W1) in Eingriff ist, wenn Bearbeitungsziel-Außenzahnräder (W1) mit dem Feinschleifrad (21) mit Gewinde zum Feinschleifen zu schleifen sind,
das Feinschleifrad (21) mit Gewinde so ausgestaltet ist, dass es von dem Bearbeitungsziel-Außenzahnrad (W1) wegbewegt wird und das Schleifrad (20) mit Gewinde so ausgestaltet ist, dass es in einer Richtung einer Drehachse davon verschoben wird,
die Superfinish-Schleifoberflächen (22b) und Zahnoberflächen des Bearbeitungsziel-Außenzahnrads (W1) so ausgestaltet sind, dass sie miteinander in Eingriff sind,
einer von den zweiten Schleifbereichen (L2) des Superfinish-Schleifrads (22) mit Gewinde so ausgestaltet ist, dass er mit einem Bearbeitungsziel-Außenzahnrad (W1) in Eingriff ist, wenn Bearbeitungsziel-Außenzahnräder (W1) zum Superfinishing mit dem Superfinish-Schleifrad (22) mit Gewinde zu schleifen sind, und
das von dem Feinschleifrad (21) mit Gewinde durchgeführte Feinschleifen und das von den Superfinish-Schleifoberflächen (22) durchgeführte Superfinishing durch aufeinanderfolgendes Ändern der ersten Schleifbereiche (L1) und der zweiten Schleifbereiche (L2) wiederholt werden, bis das n-te Bearbeitungsziel-Außenzahnrad (W1) geschliffen wurde.

2. Zahnradschleifverfahren zum Durchführen eines Schleifprozesses auf einem Bearbeitungsziel-Außenzahnrad (W1) durch Drehen des Bearbeitungsziel-Außenzahnrads (W1) und eines zylinderförmigen Schleifrads mit Gewinde, die miteinander in Eingriff sind, **dadurch gekennzeichnet, dass** das Zahnradschleifverfahren umfasst:
Bilden des Schleifrads (20) mit Gewinde unter Verwendung eines Feinschleifrads (21) mit Gewinde und eines Superfinish-Schleifrads (22) mit Gewinde; wobei
das Feinschleifrad (21) mit Gewinde, das in einer zylindrischen Form gebildet ist und in dem eine Rippe (21a) an einem äußeren Umfang des Feinschleifrads (21) mit Gewinde in einer schraubenförmigen Struktur über die gesamte Länge des Feinschleifrads (21) mit Gewinde in einer Schleifrad-Breitenrichtung bereitgestellt ist und Feinschleifoberflächen (21b) an linken und rechten geneigten Seiten der Rippe (21a) gebildet sind,
das Superfinish-Schleifrad (22) mit Gewinde, das in einer zylindrischen Form gebildet ist und in dem eine Rippe (22a) an einem äußeren Umfang des Superfinish-Schleifrads (22) mit Gewinde in einer schraubenförmigen Struktur über die gesamte Länge des Superfinish-Schleifrads (22) mit Gewinde in der Schleifrad-Breitenrichtung bereitgestellt ist, und Superfinish-Schleifoberflächen (22b), die eine höhere Schleifleistung aufweisen als die Schleifleistung der Feinschleif-Oberflächen (21b), an linken und rechten geneigten Seiten der Rippe (22a) gebildet sind, und
eine Endoberfläche des Feinschleifrads (21) mit Gewinde und eine Endoberfläche des Superfinish-Schleifrads (22) mit Gewinde in Kontakt gebracht und koaxial miteinander verbunden werden, und die Rippe (21a) des Feinschleifrads (21) mit Gewinde und die Rippe (22a) des Superfinish-Schleifrads (22) mit Gewinde derart miteinander verbunden sind, dass die Feinschleif-Oberflächen (21b) des Feinschleifrads (21) mit Gewinde und die Superfinish-Schleifoberflächen (22b) des Superfinish-Schleifrads (22) mit Gewinde Schleifoberflächen bilden, die miteinander in einer Richtung eines Gewindes des Schleifrads mit Gewinde bündig sind, **dadurch gekennzeichnet, dass** das Verfahren ferner umfasst:
Einstellen von n ersten Schleifbereichen (L1) entlang des Feinschleifrads (21) mit Gewinde, wobei die ersten Schleifbereiche (L1) von einer ersten vorbestimmten Länge in der Schleifrad-Breitenrichtung definiert sind,
Einstellen von n zweiten Schleifbereichen (L2) entlang des Superfinish-Schleifrads (22) mit Gewinde, wobei die zweiten Schleifbereiche (L2) von einer zweiten vorbestimmten Länge in der Schleifrad-Breitenrichtung definiert sind,
Verwenden eines der ersten Schleifbereiche (L1) des Feinschleifrads (21) mit Gewinde für ein Bearbeitungsziel-Außenzahnrad (W1), wenn Bearbeitungsziel-Außenzahnräder (W1) mit dem Feinschleifrad (21) mit Gewinde zum Feinschleifen zu schleifen sind;
Bewegen des Feinschleifrads (21) mit Gewinde weg von dem Bearbeitungsziel-Außenzahnrad (W1) und dann Verschieben des Schleifrads (20) mit Gewinde in einer Richtung einer Drehachse davon;
Ineingriffbringen der Superfinish-Schleifoberflächen (22b) und Zahnoberflächen des Bearbeitungsziel-Außenzahnrads (W1);
Verwenden eines der zweiten Schleifbereiche (L2) des Superfinish-Schleifrads (22) mit Gewinde für ein Bearbeitungsziel-Außenzahnrad (W1), wenn Bearbeitungsziel-Außenzahnräder (W1) mit dem Superfinish-Schleifrad (22) mit Gewinde zum Superfinishing zu schleifen sind; und
das von dem Feinschleifrad (21) mit Gewinde durchgeführte Feinschleifen und das von den Superfinish-Schleifoberflächen (22) durchgeführte Superfinishing durch aufeinanderfolgendes Wechseln der ersten Schleifbereiche (L1) und der zweiten Schleifbereiche (L2) wiederholt werden, bis das n-te Bearbeitungsziel-Außenzahnrad (W1) geschliffen wurde.

## Revendications

1. Machine de meulage d'engrenage comprenant :
une meule filetée de forme cylindrique (20) pour le meulage d'engrenage qui meule un engrenage externe cible d'usinage (W1) en tournant en engrènement avec l'engrenage externe cible d'usinage (W1) ;
une tête de meule (11) sur laquelle une broche (12) est supportée en rotation autour d'un axe de rotation de meule (B1), la meule filetée (20) étant montée sur la broche (12) ;
une table (13) sur laquelle l'engrenage externe cible d'usinage (W1) est fixé, l'engrenage externe cible d'usinage (W1) étant entraîné en rotation autour d'un axe de rotation (C1) conjointement avec la table (13), dans laquelle :
la meule filetée (20) comprend :
une meule filetée de finition (21) qui est formée selon une forme cylindrique, et dans laquelle une saillie (21a) est prévue au niveau d'une périphérie externe de la meule filetée de finition (21) selon un motif hélicoïdal sur toute la longueur de la meule filetée de finition (21) dans une direction de largeur de meule et des surfaces de meulage de finition (21b) sont formées au niveau des faces inclinées gauche et droite de la saillie (21a) ; et
une meule filetée de super finition (22) qui est formée selon une forme cylindrique, et dans laquelle une saillie (22a) est prévue au niveau d'une périphérie externe de la meule filetée de super finition (22) selon un motif hélicoïdal sur toute la longueur de la meule filetée de super finition (22) dans la direction de largeur de meule et des surfaces de meulage de super finition (22b) ayant une performance de meulage supérieure à la performance de meulage des surfaces de meulage de finition (21b) sont formées au niveau des faces inclinées gauche et droite de la saillie (22a), dans lequel :
une surface d'extrémité de la meule filetée de finition (21) et une surface d'extrémité de la meule filetée de super finition (22) sont amenées en contact l'une par rapport à l'autre et raccordées, de manière coaxiale, entre elles, et la saillie (21a) de la meule filetée de finition (21) et la saillie (22a) de la meule filetée de super finition (22) sont raccordées entre elles, de sorte que les surfaces de meulage de finition (21b) de la meule filetée de finition (21) et les surfaces de meulage de super finition (22b) de la meule filetée de super finition (22) forment des surfaces de meulage qui viennent à fleur entre elles dans une direction d'un filet de la meule filetée, **caractérisée en ce que** la machine comprend en outre :
n premières plages de meulage (L1) définies par une première longueur prédéterminée dans la direction de largeur de meule sont déterminées le long de la meule filetée de finition (21),
n secondes plages de meulage (L2) définies par une seconde longueur prédéterminée dans la direction de largeur de meule sont déterminées le long de la meule filetée de super finition (22),
l'une des premières plages de meulage (L1) de la meule filetée de finition (21) est configurée pour être engrenée avec un engrenage externe cible d'usinage (W1) lorsque les engrenages externes cibles d'usinage (W1) doivent être meulés avec la meule filetée de finition (21) pour la finition,
la meule filetée de finition (21) est configurée pour être déplacée à l'opposé de l'engrenage externe cible d'usinage (W1) et la meule filetée (20) est configurée pour être déplacée dans une direction de son axe de rotation,
les surfaces de meulage de super finition (22b) et les surfaces de dent de l'engrenage externe cible d'usinage (W1) sont configurées pour s'engrener ensemble,
l'une des secondes plages de meulage (L2) de la meule filetée de super finition (22) est configurée pour être engrenée avec un engrenage externe cible d'usinage (W1) lorsque les engrenages externes cibles d'usinage (W1) doivent être meulés avec la meule filetée de super finition (22) pour la super finition, et
la finition réalisée par la meule filetée de finition (21) et la super finition réalisée par les surfaces de meulage de super finition (22) sont répétées en changeant ensuite les premières plages de meulage (L1) et les secondes plages de meulage (L2) jusqu'à ce que l'engrenage externe cible d'usinage (W1) soit meulé.

2. Procédé de meulage d'engrenage pour réaliser un processus de meulage sur un engrenage externe cible d'usinage (W1) en faisant tourner l'engrenage externe cible d'usinage (W1) et une meule filetée de forme cylindrique en engrènement entre eux, **caractérisé en ce que** le procédé de meulage d'engrenage comprend l'étape suivante :
former la meule filetée (20) à l'aide d'une meule filetée de finition (21) et d'une meule filetée de super finition (22) ; dans lequel :
la meule filetée de finition (21) est formée selon une forme cylindrique, et dans laquelle une saillie (21a) est prévue sur une périphérie externe de la meule filetée de finition (21) selon un motif hélicoïdal sur toute la longueur de la meule filetée de finition (21) dans une direction de largeur de meule et des surfaces de meulage de finition (21b) sont formées au niveau des faces inclinées gauche et droite de la saillie (21a),
la meule filetée de super finition (22) est formée selon une forme cylindrique, et dans laquelle une saillie (22a) est prévue sur une périphérie externe de la meule filetée de super finition (22) selon un motif hélicoïdal sur toute la longueur de la meule filetée de super finition (22) dans la direction de largeur de meule et des surfaces de meulage de super finition (22b) ayant une performance de meulage supérieure à la performance de meulage des surfaces de meulage de finition (21b) sont formées au niveau des faces inclinées gauche et droite de la saillie (22a), et
une surface d'extrémité de la meule filetée de finition (21) et une surface d'extrémité de la meule filetée de super finition (22) sont amenées en contact entre elles et raccordées, de manière coaxiale, l'une à l'autre, et la saillie (21a) de la meule filetée de finition (21) et la saillie (22a) de la meule filetée de super finition (22) sont raccordées entre elles, de sorte que les surfaces de meulage de finition (21b) de la meule filetée de finition (21) et les surfaces de meulage de super finition (22b) de la meule filetée de super finition (22) forment des surfaces de meulage qui viennent à fleur entre elles dans une direction d'un filet de la meule filetée, **caractérisé en ce que** le procédé comprend en outre les étapes consistant à :
déterminer n premières plages de meulage (L1) le long de la meule filetée de finition (21), les premières plages de meulage (L1) étant définies par une première longueur prédéterminée dans la direction de largeur de meule,
déterminer n secondes plages de meulage (L2) le long de la meule filetée de super finition (22), les secondes plages de meulage (L2) étant définies par une seconde longueur prédéterminée dans la direction de largeur de meule,
utiliser l'une des premières plages de meulage (L1) de la meule filetée de finition (21) pour un engrenage externe cible d'usinage (W1) lorsque les engrenages externes cibles d'usinage (W1) doivent être meulés avec la meule filetée de finition (21) pour la finition ;
déplacer la meule filetée de finition (21) à l'opposé de l'engrenage externe cible d'usinage (W1) et décaler ensuite la meule filetée (20) dans une direction de son axe de rotation ;
engrener les surfaces de meulage de super finition (22b) et les surfaces de dent de l'engrenage externe cible d'usinage (W1) ;
utiliser une des secondes plages de meulage (L2) de la meule filetée de super finition (22) pour un engrenage externe cible d'usinage (W1) lorsque les engrenages externes cibles d'usinage (W1) doivent être meulés avec la meule filetée de super finition (22) pour la super finition ; et
la finition réalisée par la meule filetée de finition (21) et la super finition réalisée par les surfaces de meulage de super finition (22) sont répétées en changeant ensuite les premières plages de meulage (L1) et les secondes plages de meulage (L2) jusqu'à ce que le n^{ième} engrenage externe cible d'usinage (W1) soit meulé.
